# EUROPEAN PATENT SPECIFICATION

(11) **EP 1 323 778 B1**
(45) Date of publication and mention of the grant of the patent: **22.12.2004**
(21) Application number: 02258851.1
(22) Date of filing: 23.12.2002
(51) Int. Cl.: C08L 23/00, C08L 21/00, C08L 25/10

(54) **Thermoplastic composition**
Thermoplastische Zusammensetzung
Composition thermoplastique

(30) Priority: 31.12.2001 US 345687 P
(43) Date of publication of application: 02.07.2003
(73) Proprietor: THE GOODYEAR TIRE & RUBBER COMPANY, Akron, Ohio 44316-0001 (US)
(72) Inventor: Ajbani, Manoj, Copley, Ohio 44321 (US); Materne, Thierry Florent Edme, Richfield, Ohio 44286 (US); Kiehl, Christopher, Akron, Ohio 44303 (US)
(74) Representative: Carpmaels & Ransford

(56) References cited:
- US-A- 4 250 273
- US-A- 4 271 049
- US-A- 4 340 684
- US-A- 4 343 918
- US-A- 5 064 910
- US-A- 5 677 399
- US-B1- 6 228 908
- US-B1- 6 239 218

## Description

### Background of the Invention

United States Patent 3,758,643 discloses blends of partially cured monoolefin rubber such as EPDM or EPM with a polyolefin resin (polypropylene) where the rubber phase was cured with a peroxide. The compositions were useful as thermoplastic elastomers.

United States Patent 4,104,210 discloses compositions of blends of vulcanized high diene rubbers with crystalline thermoplastic polyolefin resins. The diene rubbers include copolymers of diene with styrene, vinyl pyridine, acrylonitrile or methacrylonitrile. The diene rubber content in the blends is about 75-55 parts by weight and the thermoplastic polyolefin content is 25-45 parts by weight and the diene was highly crosslinked. United States Patent 4,104,210 does not disclose that useful blend compositions can be obtained when the diene copolymer rubber comprises of multiple arms and is coupled with Sn or Si, it also does not disclose that high impact thermoplastic blend compositions can be developed with the Sn or Si coupled diene copolymer rubbers. The subject patent also does not suggest that the diene-based rubbers used in the blends may comprise of copolymers of 1,3-diene polybutadiene and isoprene.

United States Patent 4,130,535 discloses blends of polyolefin resins and completely cured monoolefin copolymer rubber such as Ethylene-Propylene-Diene rubber.

United States Patent 4,183,876 discloses thermoplastic compositions of crystalline thermoplastic polyolefin resins and cross-linked polyalkenamer rubber.

United States Patent 4,202,801 discloses dynamically and partially cured blends of monoolefin copolymer rubbers such as ethylene-propylene copolymer rubbers or ethylene-propylene-diene terpolymer rubbers, polyolefin resin, and conjugated diene rubbers such as cis-1,4 polyisoprene or cis-polybutadiene or polychloroprene.

United States Patent 4,203,884 discloses blends of polynorborene, plasticizer, and thermoplastic polyolefin resin.

United States Patent 4,250,273 discloses thermoplastic ter-blend compositions comprising of about 10 to 50 parts of a crystalline 1-olefin polymer, about 80 to 15 parts of a random styrene-butadiene rubber copolymer and from about 5 to 55 parts of a highly saturated elastomer. The invention also related to ter-blends where the rubbers are partially vulcanized. United States Patent 4,250,273 does not disclose that useful blend compositions can be obtained when the diene copolymer rubber comprises of multiple arms and is coupled with tin or silicon, it also does not disclose that high impact blend compositions can be developed with the tin or silicon coupled diene copolymer rubbers Further, it does not suggest that a binary blend composition of a styrene-butadiene copolymer rubber and a thermoplastic olefin resin can be used to make useful compositions with good surface appearance and physical properties.

United States Patent 4,311,628 relates to blends of polypropylene and EPDM where EPDM was cured with phenolic resins for better oil resistance.

United States Patent 4,271,049 discloses blends of crystalline polypropylene and cured rubbers including styrene-butadiene rubber up to 25 weight % styrene or alphamethyl styrene and the rubber is cured with phenolic or urethane or sulfur donor curative. The preferred compositions were from 25-75 parts of polypropylene and about 75-25 parts of rubber. United States Patent 4,271,049 does not disclose that useful thermoplastic compositions can be obtained when 20 parts of high diene elastomer such as SBR be dispersed in 80 parts of polypropylene resin, based on 100 parts of said mixture. Furthermore, United States Patent 4,271,049 does not teach that useful blend compositions can be obtained when SBR rubber comprises of multiple arms and is coupled with Sn or Si, it also does not disclose that high impact blend compositions can be developed with the Sn or Si coupled diene copolymer rubbers.

United States Patent 4,183,876 teaches blends of crosslinked polyalkenamer rubber and crystalline thermoplastic blends.

United States Patent 4,340,684 is similar to United States Patent 4,250,273 and further teaches partial curing of the rubber and narrows the claims for the melt flow rate of the formed blend. The Styrene content in the SBR rubber is up to 40 % by weight of the said rubber. United States Patent 4,340,684 does not disclose that useful blend compositions can be obtained when the diene copolymer rubber comprises of multiple arms and is coupled with Sn or Si, it also does not disclose that high impact blend compositions can be developed with the Sn or Si coupled diene copolymer rubbers. Further, it does not suggest that a binary blend composition of a styrene-butadiene copolymer rubber and a thermoplastic olefin resin can be used to make useful compositions with good surface appearance and physical properties.

United States Patent 4,343,918 claims processes for making blends primarily disclosed in United States Patent 4,250,273.

United States Patent 4,594,390 discloses a process for preparation of thermoplastic elastomers of polypropylene and EPDM under conditions of high shear required for dynamic vulcanization of the EPDM.

United States Patent 4,927882 discloses thermoplastic elastomer produced by dynamic vulcanization of SBR to form a dispersed phase of crosslinked SBR in a co-continuos phase of SEBS and polypropylene. The blends were useful in pharmaceutical, consumer and health industries.

United States Patent 5,021,500 teaches TPO compositions prepared with a crystalline thermoplastic resin and a halobutyl rubber.

United States Patent 5,051,478 provides a dynamically vulcanized composition comprising of a polyolefin resin, an elastomer, and an ethylene copolymer resin such as a copolymer of ethylene and vinyl acetate or an alkyl acrylate.

United States Patent 5,248,729 suggests the process for making thermoplastic composition by heat treating a mixture of a thermoplastic resin with no olefinic unsaturated carbon-carbon bond, an elastomer from the group of SBS, SIS, 1,2-polybutadiene rubber, and EPDM rubber, with a crosslinking agent of dihydroaromatic compound.

United States Patent 5,523,356 teaches blends obtained by dynamic vulcanization of polypropylene, polyisobutene, EPDM rubber, and polybutadiene.

United States Patent 5,621,045 discloses thermoplastic vulcanizates from semicrystalline polyolefins and blends of crosslinked rubbers with one rubber being C4 to C7 isomonoolefin based (isobutylene) and rubber being EPDM or rubbers derived from a conjugated diene.

United States Patent 6,051,681 discloses process for preparation of thermoplastic elastomer with a rubber such as ethylene-alpha-olefin diene terpolymer (EPDM) and a thermoplastic resin, phenolic curative, a hydrotalcite and a HALS compound.

### Summary of the Invention

The subject invention discloses thermoplastic composition which is comprised of a blend of a thermoplastic polyolefin resin and a modified elastomer, wherein said thermoplastic polyolefin resin is selected from the group of polyethylene, isotactic polypropylene, syndiotactic polypropylene, polypropylene impact copolymers containing about 1-7 % by weight of ethylene, reactor grade modified polypropylene, metallocene polypropylene, wherein said modified elastomer is comprised of a conjugated diene selected from 1,3-butadiene and isoprene, wherein said modified elastomer is highly branched, wherein said modified elastomer is characterized by having a G' and G" frequency crossover of no more than 4 radians/s at 100°C, wherein the thermoplastic polyolefin is present in an amount which is within the range of about 5 parts by weight to about 95 parts by weight, and wherein the modified elastomer is present in an amount which is within the range of about 5 parts by weight to about 95 parts by weight, based upon the total weight of the thermoplastic composition.

The present invention also discloses a process for preparing a thermoplastic composition which comprised (1) mixing a thermoplastic polyolefin resin and a modified elastomer at a temperature about or above the melting point of the thermoplastic resin in a mixing devise, (2) discharging the mixed blend from the mixing devise, and (3) forming the mixed blend into a pellet, sheet, or article of manufacture, wherein said thermoplastic polyolefin resin is selected from the group of polyethylene, isotactic polypropylene, syndiotactic polypropylene, polypropylene impact copolymers containing about 1-7 % by weight of ethylene, reactor grade modified polypropylene, metallocene polypropylene, wherein said modified elastomer is comprised of a conjugated diene selected from 1,3-butadiene and isoprene, wherein said modified elastomer is highly branched, wherein said modified elastomer is characterized by having a G' and G" frequency crossover of no more than 4 radians/s at 100°C, wherein the thermoplastic polyolefin is present in an amount which is within the range of about 5 parts by weight to about 95 parts by weight, and wherein the modified elastomer is present in an amount which is within the range of about 5 parts by weight to about 95 parts by weight, based upon the total weight of the thermoplastic composition.

The thermoplastic compositions of this invention are particularly useful for manufacturing automotive interior panels, automotive exterior body panels, automotive instrument panels, soft-touch parts, household appliances, household goods, toys, razor holders, razor overmoldings, stapler thumb overmoldings, pen grips, computer housings, and computer key boards.

### Detailed Description of the Invention

In accordance with this invention, elasto-plastic blends of a diene elastomer coupled with Si or Sn with thermoplastic olefinic resins are disclosed. Such thermoplastic blends have high impact strength and good balance of physical properties. The elastomers have low glass transition temperatures for providing low temperature impact properties. Also disclosed is the preferred process of preparing such blends. These blends may have several useful applications such as automotive exterior, interior, body panels, household articles, appliance parts, toys etc. Further more, the crumb form of the diene rubber with tin or silica coupling or a higher degree of branching, has high resistance to cold flow and allows to be fed into continuous mixing equipment such as a twin-screw extruder without being appreciably re-agglomerated.

Thermoplastic olefins (TPOs) are widely used in an automobile. The fascia or bumpers or side impact panels form a major portion of the TPO usage. More recently TPOs are also being used in automotive interior applications and are also being used for PVC replacement. These TPOs are generally comprised of blends of a thermoplastic olefin such as polypropylene. Since the glass transition temperature of the polypropylene ranges from about -10°C to 10°C and is not low enough, it possesses inferior low temperature impact properties. Therefore, the TPO additionally consists of an elastomeric phase that has a lower glass transition temperature (T_{g}) for providing the necessary cold temperature impact properties. The elastomers used are generally olefinic based with either low diene unsaturation or no diene unsaturation. The olefinic elastomers with low diene unsaturation are ter-polymers of ethylene, propylene, and a non-conjugated diene based monomer (EPDM). The olefinic eiastomers with no diene unsaturation may be ethylene-propylene copolymers. More recently these no-diene elastomers have been metallocene-based ethylene elastomers. The elastomers may be incorporated in the thermoplastic olefinic resin such as polypropylene in a compounding step and the resulting TPOs are called Compounded-TPOs or C-TPOs. Some of the elastomers may be incorporated in the polypropylene resin in the second reactor following the polymerization of the polypropylene in the first reactor. Such TPOs are generally called Reactor-TPOs or R-TPOs.

The elastomeric phase in the TPOs is generally dispersed when TPOs of higher stiffness are obtained without adding any reinforcement fillers. The elastomeric phase may be co-continuous with the thermoplastic resin phase if greater level of flexibility is required, without appreciably sacrificing the thermoplasticity. The elastomer phase may be non-crosslinked or partially crosslinked. For the sake of this invention, the TPOs are considered blends of a thermoplastic olefinic resin and an elastomer where the thermoplastic content is high enough and the elastomer may or may not be . There is considerable prior art mentioning the use of other compounding ingredients such as talc, UV stabilizers, antioxidants, processing aids, oils, colorants, adhesion promoter's etc. that may also be a part of the TPO composition.

If in such thermoplastic blends the elastomer content is high enough and yet not too high as it is in the vulcanized and thermosetting rubber articles such as tires, the blends tend to render elastomer like properties without losing the thermoplasticity. In other words, when the thermoplastic blends or their articles, are stretched and released, they tend to somewhat return to their original state in a nominal time period and are still re-processable as thermoplastics. Such blends may often be called as thermoplastic elastomers or TPEs. If the elastomeric phase in the TPEs is crosslinked or vulcanized, preferably highly crosslinked and mostly during the preparation of the said blends, the TPEs may also called as Thermoplastic Vulcanizates or TPVs. High degree of crosslinking enables greater elasticity and low compression set and generally higher oil resistance compared to their uncrosslinked analogs. For the sake of this invention, above definitions of TPO, TPE and TPV will be generally applicable to describe the compositions and processes per this invention. In this invention, elastomers and rubbers are used interchangeably. In this invention, vulcanized, crosslinked, and cured terms are also used interchangeably.

United States Patent 3,758,643, United States Patent 3,806,558, United States Patent 4,104,210, United States Patent 4,130,535, United States Patent 4,183,876, United States Patent 4,202,801, United States Patent 4,271,049, United States Patent 4,340,684, United States Patent 4,250,273, United States Patent 4,343,918, United States Patent 4,927,882, United States Patent 4,311,628, United States Patent 5,523,356, United States Patent 5,248,729, United States Patent 5,021,500, United States Patent 5,051,478, and United States Patent 5,925,703 provide compositions, methods, examples of several varieties of TPOs, TPEs, and TPVs, and incorporated herein as a reference.

The thermoplastic polyolefins that are generally used in the blends are polypropylene and polyethylene. Generally at least one type of polypropylene is employed. The polypropylene is generally isotactic form of homopolymer but other forms of polypropylene such as syndiotactic or atactic may also be used as a part of the blend. Polypropylene impact copolymers wherein in a second copolymerization step, ethylene is reacted with polypropylene, may also be employed. Polypropylene random copolymers that usually contain 1-7 % ethylene copolymerized with polypropylene can also be used. The reactor grade impact modified polypropylene can also be used. A publication article in Modern Plastics Encyclopedia/89, mid October 1988 Issue Volume 65, Number 11, pages 86-92, describes several types of polypropylenes, which is incorporated herein as a reference for the types of polypropylenes that may be used in the blends of the said invention. Metallocene based polypropylene resins that may be generally produced by single-site technology may also be used. The polypropylene produced by methods that were presented in following article may also be used, which is incorporated as a reference "Metocene TM, Precise Tailoring of Polypropylene Resins Using Single-Site Technology, David Fischer, Presented at the SPE Automotive TPO Global Conference 2001, Hyatt Regency, Dearborn, MI, October 1-3, 2001.

The thermoplastic olefins may have a melt flow rate that is generally greater than 0.5 g/10 minutes as measured per ASTM 1238 at 230 C/2.16 Kg load. Higher melt flow rate resins may be preferred for TPO applications that require better flow. For TPO applications, it is more preferred to use resins with melt flow rate that is greater than at least 5 g/10 min, more preferably greater than 10 g/min., and most preferably greater than 20 g/10 minutes.

The diene elastomers that are generally prepared by solution polymerization techniques were described in Paper No 158, at the Rubber Division Meeting of the American Chemical Society, Orlando, Florida, Sept 21-24, 1999. The solution rubbers that are particularly more useful in this invention are the modified elastomer such as copolymers of styrene and diene selected from butadiene and isoprene and the living polymer, before terminating the polymerization, modified with tin or silicon. Such modified elastomers may also be for example styrene/butadiene copolymers and styrene/isoprene/butadiene ter-polymers. Homopolymers of diene may also be employed, but it is more preferred to have the styrene be present as a co-monomer. Copolymers of Isoprene and butadiene may also be used.

An important characteristics of the elastomer, particularly the tin-modified elastomers, is that a substantial portion, preferably at least 40%, and more generally in the range of about 60 to about 85 % of the tin (Sn) bonds or silicon (Si) bonds are bonded to the diene units of the styrene/diene copolymer, which may be referred herein as Sn-dienyl or Si-dienyl bond, for example butadienyl bonds in case of butadiene terminating with the tin (or silicon).

A modified copolymer elastomer may be prepared by copolymerization of styrene with 1,3-butadiene and/or isoprene in an organic solution with an alkyl lithium catalyst. A co-catalyst or catalyst modifier may also be used. Such polymerization methods are well known to those skilled in this art. After formation of the copolymer elastomer, but while the catalyst is still active and, therefore, while the copolymer is still considered a living or live polymer that is capable of further polymerization, the polymerization can be terminated by reacting the live polymer with with a tin or silicon compound such as tin tetrachloride. This taking into account that the valence of tin is four, typically the modified copolymer is considered coupled or capped, with an accompanying molecular weight or viscosity jump or increase, and the modified copolymer being in what is sometimes called as a star shaped, or star configured, coupled elastomer.

A coupled styrene/isoprene/butadiene terpolymer may also be used where the isoprene content is less than about 30 % by weight or so of the said elastomer.

A tin coupled copolymer elastomer can also be obtained via coupling with an organo tin compound such as for example alkyl tin chloride, dialkyl tin chloride, and trialkyl tin chloride, resulting in variations in the tin coupled polymer with the trialkyl tin monochloride yielding simply a tin terminated copolymer.

Some examples of preparation of such modified elastomers is further given in following Journal Articles: "Solution-Polymerized Rubbers with Superior Breakdown Properties" Journal of Applied Polymer Science Vol. 14, PP 1421-1432 (1970), "Tin Coupled SBRs: Relationship between Coupling Type and Properties, Paper No 78, Presented at 148^{th} Meeting of the Rubber Division, American Chemical Society, Cleveland, Ohio, October 17-20, 1995, and "Newly Developed Solution SBRs for Low Rolling Resistance Tire", RCT 1990 V 63 # 1, P 8-22, which are incorporated herein as a reference.

Some examples of modified or coupled solution elastomers such as Sn or Si coupled, with several variations are given in United States Patent 6,090,880, United States Patent 5,064,910, United States Patent 4553,578, United States Patent 4,444,236, United States Patent 5,362,794, United States Patent 5,677,399, United States Patent 5,786,441, United States Patent 6,008,295, United States Patent 6,252,007, and United States Patent 6,228,908, which are incorporated herein as a reference, as they may also be used in blends as disclosed in this invention.

The diene elastomers that are polymerized by solution techniques that may or may not be coupled with Si or Sn have several advantages due to the ability to tailor the elastomers with specific glass transition temperatures, styrene content, % butadiene microstructure (1,2 -butadiene or vinyl), and/ or changing the level of branching. It is generally preferred to have the modified diene elastomer to have styrene content in the range of 5 to 45 %, more generally in the 10 to 40 % range, and most preferably in the 12 to 37 % by weight of the said elastomer. It is known that the glass transition temperature of the said rubber may increase on increasing the styrene content. For applications that require low temperature impact properties such as automotive fascia or side impact panels, it is generally preferred to use the elastomer that has a glass transition temperature no greater than -25°C, more preferred no more greater -40°C, most preferred no greater than -45°C.

United states Patent 4,250,273 describes several diene monomers that may be used to make solution polymers, which may be suitable to make the coupled elastomers used in this invention, and is incorporated herein as a reference.

The diene based rubbers that are additionally useful for making the blend compositions are highly branched and may or may not be obtained via Sn or Si coupling. These diene elastomers are characterized in a dynamic mechanical thermal analyzer such as a RPA instrument (Rubber Process Analyzer) by conducting a frequency sweep at an isothermal temperature of 100°C. The dynamic storage (G') and loss modulii (G") and their ratio (G"/G') or tangent delta are measured. The frequency in (radians/s) at which there is a crossover in the values of G' or G" is measured i.e. the frequency at which the G' and G" values are equal, is measured. The frequency at which there is a crossover in the values of G' and G" is much lower for the highly branched diene elastomers than their rather unbranched or more linear analogs. The synthesis and RPA characterization of such uncoupled elastomers is described in details in the publication "Synthesis and Rheological Characterization of Branched versus Linear Solution Styrene-butadiene Rubber", by Michael L. Kerns, and Steven K. Henning, Paper No 52, Presented at the meeting of the Rubber Division, American Chemical Society, Rhode Island, April 24-27, 2001, which is incorporated herein as a reference. The branched elastomers are believed to provide improved cold flow resistance, more particularly for the crumb rubber form, and may also provide improved processing, more so in the TPE and TPV applications.

For the applications where the low temperature impact is not that critical, it may be acceptable to use the elastomer with a slightly higher glass transition temperature. These applications may be where the soft touch or soft feel is desired from the said blend, which can be achieved by using an elastomer with the glass transition temperature that is generally less than 5°C, more generally less than 0°C, and most generally less than -10°C. For some applications, the feel or response of the soft material to the human touch appears to be subjectively better when the glass transition of the elastomer used in the blend is around or above -25°C and below 10°C, more preferably around or above -17 ° C and below 10°C, when the application is at room temperature.

The modified elastomer may have the 1,2-butadiene microstructure or the vinyl content varied from about 5 % to about 95 %, more generally from about 6 % to about 65 %, and most generally from about 6 % to about 58 %. This flexibility in variation of the vinyl content is possible with the solution elastomers. The glass transition of the elastomer also increases with increasing vinyl content. Therefore, applications requiring better low temperature impact properties, a lower vinyl content is desirable. For applications where soft touch and soft feel is desired, higher vinyl content is preferred. Also, the resistance to ultraviolet (UV) radiation, ozone, and oxidation resistance may also be a function of the vinyl content, which may be achieved by a proper selection of the vinyl content.

The Mooney viscosity (ML 1+4 @ 100 C, large rotor) of the said solution rubber may be generally in the range of 10 to about 135, more preferably from 25 to about 100, and most preferably from about 30 to about 80 or so. For making the TPO compositions, the polyolefin and the said rubber are mixed or kneaded around or above the melt point temperatures of the polyolefin. For most polypropylenes, this temperature may be above 130°C, most generally above 145°C, and most preferably above 150°C. Typical polymer mixing or kneading equipment that is capable of rendering heat and kneading may be employed. These include mills, kneaders, extruders (both single screw and twin-screw), Banbury mixers, calenders, and the like. The sequence of mixing and method may depend on the final composition. A combination of Banbury batch mixers and continuous mixers may also be employed. If a TPE or TPV composition is being obtained, typical batch mixers such as Banbury mixers may be employed to mix the rubber and the thermoplastic till a homogeneous mixture is obtained. For such TPE or TPV compositions, a continuous mixer such as a twin-screw extruder may also be used. Such TPE & TPV compositions may have a higher rubber loading when compared to the TPO compositions. Generally speaking, for the TPE and TPV compositions, the weight ratio of the said rubber to the thermoplastic may be from about 90:10 to about 50:50, more preferably from about 80:20 to about 60:40, and most preferably from about 75:25 to about 65:35 or so. For the TPO applications, the weight ratio of the said rubber to the thermoplastic may be from about 49:51 to about 10:90, more preferably from 35:65 to about 15:85. The ratios may be changed by changing the viscosity ratios of the rubber and the thermoplastic. There is considerable art in the literature for changing the phase continuity by changing the viscosity ratios of the constituents and a person skilled in this art may vary the phase continuity by changing the viscosity ratios of the elastomer and the thermoplastic olefinic resin.

The blend compositions may contain processing oils, plasticizers, processing aids. Rubber processing oils have a certain ASTM designations and may fall under paraffinic, napthenic or aromatic process oils and suitable oils may be employed. The ordinarily skilled rubber chemist will decide on the type of oil that may be used. The parts of oil used may be generally from about 0 to about 130 parts, more preferably about 0 parts to about 100 parts, and most preferably about 0 parts to about 50 parts, per 100 parts of the rubber or elastomer. Higher amounts of oil may tend to improve the processing at the expense of some physical properties.

It is known that the high diene based rubbers have lower resistance to UV, ozone, and oxidation, compared to the low-diene or rubbers with no olefinic unsaturation. It is also known that tires, which are primarily made from the high diene rubbers and often, contain carbon black along with anti-ozone and anti-oxidants, have a high degree of reliability and durability in dynamic conditions of UV, ozone, and oxygen.

For the TPO, TPV, and TPE applications, it is preferred that when the application accepts a black color, the rubber phase may preferably contain the carbon black for the UV absorption characteristics. Representative examples of carbon blacks include ASTM N110, N121, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP No. ranging from 34 to 150 cm3/100 g. It is more preferred that the particle size of the carbon black is small.

The thermoplastic blends may also contain antiozonants and oxidants that are known to a rubber chemist of ordinary skill. The antiozonants may be physical protectants such as waxy materials that come to the surface and protect the part from oxygen or ozone or they may chemical protectors. The chemical protectors may be selected from the class of styrenated phenols, butylated octylated phenol, butylated di(dimethylbenzyl) phenol, p-phenylenediamines, butylated reaction products of p-cresol and Dicyclopentadiene (DCPD, polyphenolic anitioxidants, hydroquinone derivatives, quinoline, diphenylene antioxidants and thioester antioxidants and the like and their blends. Some representative trade names of such products are Wingstay S, Wingstay T, Ingstay C, Wingstay 100, Wingstay 100 AZ, Wingstay 200, Wingstay L or LHLS, Wingstay K, Wingstay 29, and Wingstay SN-1 of The Goodyear Tire & Rubber Company and the like from Ciba Geigy or Great Lakes Chemical Company or Flexsys. The antioxidants and antiozonants used will preferably be non-staining and non-migratory.

For applications that require non-black pigmentation or compositions where the natural color may be desired, carbon black may not be used and above mentioned antioxidants and antiozonant may be used instead. It is important that the said elastomer contains a significant portion of the antioxidant and antiozonant and/or carbon black (whenever used) in the said blends.

For providing additional stability against UV radiation, hindered amine light stabilizers (HALS) and UV absorbers may be also used. A skilled person is aware of such stabilizers. For example, Tinuvin RTM 123, 144, 622, 765, 770 and 780, and ChemisorbTTM-944 and the like may be employed. These kinds of UV stabilizers are available from Ciba Speciality Chemicals and Cytex Industries. United States Patent 6,051,681 teaches the use of a HALS compound and a Lewis acid for achieving superior surface quality, which is incorporated herein as a reference.

For some compositions, additional mixing process may be employed to predisperse these anti-oxidants, antiozonants, carbon black, and UV absorbers and light stabilizers in the said elastomer in a masterbatch form and then add them in the elastomer and plastic blending stage.

When the rubber phase is fully or partially cured in the TPO, and TPV compositions, curatives of the known art may be employed. The curing may be accomplished by dynamic vulcanization, wherein the rubber phase is generally crosslinked simultaneously as it is being mixed with the thermoplastic resin. The curatives may be selected from sulfur based, peroxide based, or phenolic based curatives. United States Patent 3,758,643, United States Patent 3,806,558, United States Patent 5,051,478,United States Patent 4,104,210, United States Patent 4,130,535, United States Patent 4,202,801, United States Patent 4,271,049, United States Patent 4,340,684, United States Patent 4,250,273 4,927,882, United States Patent 4,311,628 and United States Patent 5,248,729 teach the type of curing or crosslinking agents and methods.

When sulfur based curing agents are employed, accelerators and cure activators may be used. Accelerators are used to control the time and/or temperature required for dynamic vulcanization and to improve the properties of the TPO or TPV. In one embodiment, a single accelerator system may be used, i.e., primary accelerator. The primary accelerator(s) may be used in total amounts ranging from about 0.5 to about 4, preferably about 0.8 to about 1.5, phr, where phr means per hundred parts of rubber. In another embodiment, combinations of a primary and a secondary accelerator might be used with the secondary accelerator being used in smaller amounts, such as from about 0.05 to about 3 phr, in order to activate and to improve the properties of theTPO or TPV. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. Certain processing aids and cure activators such as stearic acid and ZnO may also be used. When peroxide based curing agents are used, co-activators that are known to a rubber chemist of ordinary skill may be used in combination with the peroxides.

When the elastomer is at least partially crosslinked, especially in the TPVs, the degree of crosslinking may be measured by dissolution of the blend in a solvent for specified duration, and using certain calculations to compensate for the resin portion and then calculate % gel or unextractable rubber. The % gel would normally increase with increasing crosslinking level. These techniques are well defined and established and are known to the persons that are skilled in this art. The % gel content in the thermoplastic blends, more so in the TPVs may be anywhere in the range of about 5 % to 100 %.

When TPE or TPV based compositions are used, the blends of the coupled-SBR and the polyolefin may show improved processability. The improved processability may be due to the breaking of Sn-carbon or Si-carbon bonds due to shearing. These bonds may also be broken rapidly by the addition of agents such as stearic acid, carbon black, or amine containing moieties and in the presence of an acceptable amount of shear and heat. Improved processability may be measured or characterized by a lower viscosity of the TPE or TPV composition. The improved processability may not be very apparent in the TPO compositions that have higher amounts of thermoplastic resin content.

The UV stabilization and thermo-oxidative stabilization technology for the polyolefin resins and their blends for TPOs, TPEs and TPVs are rather well developed. Two recent articles and presentations describe these stabilizations in detail. These are: 'Advances in UV Stabilization Systems for Automotive TPO', Brent M. Sanders, Cytex Industries, Presented at the SPE Automotive TPO Global Conference 2000, Hyatt Regency -Dearborn, MI, October 2-4 2000, and 'Stabilizer Selection Guidelines for Automotive TPO Applications', James H. Botkin and Peter Solera, Ciba Speciality Chemicals Corporation, SPE Automotive TPO Global Conference 2001, Hyatt Regency-Dearborn, MI, October 1-3, 2001, which are incorporated herein as a reference. These stabilization systems may be essential for achieving the UV and heat aging requirements that the TPOs have to meet, especially for the automotive applications.

Preferably the particles size of a major portion of the modified elastomer in the blend is smaller than 50 microns.

The thermoplastic compositions may also contain reinforcing fillers such as talc, CaCO₃, glass fibers, expandable 2:1 layered silicates such as Smectite, Hectorite and the like, carbon black, silica, alumina for providing appropriate level of reinforcement. Silane coupling agents may also be employed for better filler bonding. Talc is more preferred due to its attractive cost and performance. Modified carbon blacks such as CRX 2000 series, CRX 4000 series of Cabot Corporation, modified starch, modified silica (pre-treated, doped) may also be used.

The thermoplastic compositions of this invention may be processed by conventional molding techniques such as injection molding, extrusion, thermoforming, slush molding, over molding, insert molding, blow molding and the like. It is known to an ordinary person skilled in the art of rheology to select the viscosity of the composition according to the appropriate process. For example, a low melt flow rate blend may be required for extruding application and a high melt flow rate blend may be required for an injection molding application for molding large parts.

The thermoplastic compositions of the said invention may have several useful applications and some of those include automotive, household goods, industrial appliances, recreation and computer /electronics equipment. In automotive area, exterior fascia or bumpers and side impact panels may be some examples. The Fascias may be molded in color or painted or may have a weather resistant film coated on the surface. The automotive interior applications may also be several and some of them can be door handles, knobs, instrument panels, roof impact structures, applications replacing PVC etc. The automotive interior applications may also include components of vehicle that require soft feel or soft touch. Also, impact resistant structural door panels may be made from these thermoplastic blends.

United States Patents 5,962,573, United States Patent 6,166,132, and United States Patent 6,166,139 discloses compositions and methods for making directly paintable TPO applications, and are incorporated herein as a reference.

This invention is illustrated by the following examples that are merely for the purpose of illustration and are not to be regarded as limiting the scope of the invention or the manner in which it can be practiced. Unless specifically indicated otherwise, parts and percentages are given by weight.

### Examples

Solflex 3310 Sn (coupled with Sn) of The Goodyear Tire & Rubber Company was used to make blends with polypropylene resin. For comparison purposes, Solflex 3310 (no coupling) of The Goodyear Tire & Rubber Company was used. The microstructure are listed in Table 1.

**Table 1**

| **Composition & Microstructure in Weight %** | | | | |
|---|---|---|---|---|
| Rubber | Styrene | 1,2-butadiene | Cis-1,4 butadiene | Trans-1,4-butadiene |
| Solflex 3310 (Sn) | 34.1 | 7.9 | 21.8 | 36.2 |
| Solflex 3310 | 32.5 | 7 | 23.9 | 36.6 |

The glass transitions temperatures (midpoint) of Solflex 3310(Sn) and Solflex 3310 were measured in a differential scanning calorimetry (DSC) at a 10°C heating rate and were -55°C and -50°C respectively. Elastomers with low glass transition temperatures will provide low temperature impact properties. Frequency sweeps were carried out at 100 ° C for the Solflex 3310Sn and the Solflex 3310 at 0.63 degree strain in the frequency range 0.21 radians/s to 209.44 radians/s. The G' and G" values converged and crossed over at a frequency of 5 radians/s for the Solflex 3310. The G' and G" values were converging and were not measurable in the frequency range employed and may be extrapolated to below 0.21 radians/sec.

The bale form of rubbers was converted to a crumb or particulate form by grinding the rubber in the presence of talc partitioning agent. The crumb form may also be obtained towards the finishing operation of the solution polymerization process for the elastomer before compacting it to the bale form.

The final composition of the crumb rubber was 95 % rubber and 5 % talc on a weight basis. About 25 lbs. of talc-partitioned and ground or crumb Solflex 3310 (Sn) and Solflex 3310 were separately packaged in a plastic bag and stored in individual cardboard boxes for about 7 days, without any additional weight on the bags. The bags were opened for conducting further mixing experiments in the twin-screw extruder. The Solflex 3310 (Sn) crumb rubber was still usable for feeding in the extruder as a crumb rubber, whereas the Solflex 3310 (uncoupled) rubber had massed together to form large lumps that were not breakable without re-grinding. This demonstrates less cold flow for a crumb form of tin-coupled diene elastomer that contains a partitioning agent, when compared with its uncoupled Solflex 3310 analog.

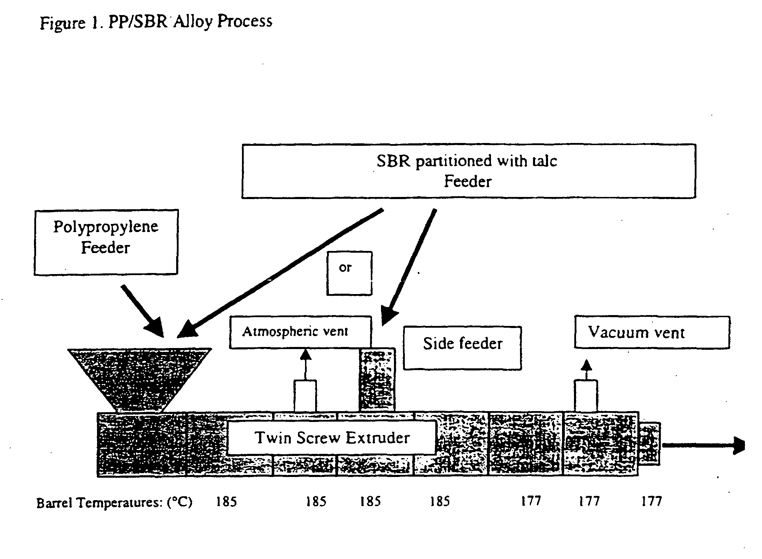

Blends of the crumb form of Solflex 3310 (Sn) or Solflex 3310 were made with a high impact copolymer polypropylene (BP Amoco-3451). The blends were made in a 43 mm twin-screw-extruder of Berstroff, with co-rotating and intermeshing screw profile with an L/D of 32. The screw elements profile that were used are shown in Table 2 and description of screw elements is given in Write-up 1. The extruder had side-feeding capability at Barrel 3 located approximately 50 percent downstream of the main feed zone. The extruder has six heated barrels and a heated die section and the temperature (°C) that was used in the barrels (1-6) & die section are 185, 185, 185, 185, 177, 177, and 177 (die). The RPM that was used for mixing was set to 135. A total feed rate of about 75 lbs/hr was used for the study. In all cases, polypropylene was always fed in the feed hopper. The general process description is shown in Figure 1.

Two variables were studied. In the first variable, the respective rubbers were added in the side-feeders. This allowed less residence time and less mixing of the rubber with polypropylene. When the rubbers were fed through the side feeder, the mixing of rubber was done primarily with the kneading blocks that are downstream of the side-feeder. In the second variable, the rubbers were fed in the main hopper. This allowed more residence time and more mixing of the rubber with the polypropylene. The mixing of the rubber was primarily done by the kneading blocks and mixing elements that were present along the entire length of the twin-screw extruder.

Due to the shearing action between the extruder elements and the polypropylene resin, the resin was melted and mixed with the rubber. The blends were extruded and pelletized. Blend compositions as listed in Table 2 were made.

**Table 2:**

| **Blend Composition in Weight %** | | | | |
|---|---|---|---|---|
| | Example 1 | Example 2 | Example 3 | Example 4 |
| Solflex 3310 | - | - | 28.5 | 28.5 |
| Solflex 3310 (Sn) | 28.5 | 28.5 | - | - |
| Talc | 1.5 | 1.5 | 1.5 | 1.5 |
| Polypropylene | 70 | 70 | 70 | 70 |
| (3451 Copolymer) Rubber Feed Location* | Barrel 3 | FH | B3 | FH |
| Residence Time(s)** | 36 | 70 | 36 | 70 |
| No. of Kneading Disks for Mixing | 20 | 35 | 20 | 35 |

| | | | | |
|---|---|---|---|---|
| *B3 means Barrel 3 and FH means Feed Hopper | | | | |
| ** Residence time of rubber fed at barrel 3 or at main feed hopper | | | | |

The blends were injection molded by injection molding technique by melting the blend about the melt point of polypropylene. It is possible to form some of the articles of manufacture such as extrudable sheets or profiles at the end of the mixing step by providing a die. Molded samples were prepared from the injection molded blends and were tested for physical properties with following results as given in Table 3.

**Table 3:**

| **Physical Properties** | | | | |
|---|---|---|---|---|
| | Example 1 | Example 2 | Example 3 (Compar.) | Example 4 (Compar.) |
| Melt Flow Rate** 230 C/ 2160 g (g/10 min) | 3.95 | 1.72 | 4.91 | 3.3 |
| Tensile Strength (psi) | 1277 | 1671 | 1725 | 1849 |
| Elongation @ Break (%) | 65 | 408 | 448 | 404 |
| Notched Izod Impact (ft-lb/in)*** | 7.56 (NB) | 12.44 (NB)1 | 0.35 (NB) | 10.22 (NB) |
| Flexural Modulus (psi) | 70682 | 62699 | 66908 | 67053 |

| | | | | |
|---|---|---|---|---|
| ** On pellets obtained from twin-screw extruder | | | | |
| *** NB indicates No-Break | | | | |

Thermoplastic blends of Example 2 that were prepared with Solflex 3310 (Sn) and were fed in the feed hopper for additional mixing resulted in compositions with very high impact strength and a good balance of physical properties. Thermoplastic blends of Example 2 that were fed in the feed hopper went through the mixing action of pimarily seven number of kneading elements, when compared to Example 1 where the same rubber was fed in the side feeder and had only been mixed primarily with four number of kneading elements, as described in Figure 1. With the right process, we believe that thermoplastic blends of higher impact strength are developed, that were not possible with the uncoupled SBR. Blends of Example 1 that were prepared with Solflex 3310 (Sn) and were fed at Barrel 3 had higher flexural modulus and are still useful for some applications that require higher modulus and lower impact. The crumb and partitioned form of Solflex 3310 (Sn) that was used to make the blends has higher resistance to agglomeration and has an advantage for supplying the rubber in a crumb form for feeding into continuous mixers such as twin-screw extruders. The examples are typical and several variations are possible without deviating from the scope of the invention ,

## Claims

1. A thermoplastic composition which is **characterized by** being comprised of a blend of a thermoplastic polyolefin resin and a modified elastomer, wherein said thermoplastic polyolefin resin is selected from the group of polyethylene, isotactic polypropylene, syndiotactic polypropylene, polypropylene impact copolymers containing 1-7 % by weight of ethylene, reactor grade modified polypropylene, metallocene polypropylene, wherein said modified elastomer is comprised of a conjugated diene selected from 1,3-butadiene and isoprene, wherein said modified elastomer is highly branched, wherein said modified elastomer is **characterized by** having a G' and G" frequency crossover of no more than 4 radians/s at 100°C, wherein the thermoplastic polyolefin is present in an amount which is within the range of 5 parts by weight to 95 parts by weight, and wherein the modified elastomer is present in an amount which is within the range of 5 parts by weight to 95 parts by weight, based upon the total weight of the thermoplastic composition.

2. A thermoplastic composition as specified in claim 1 **characterized in that** the modified elastomer is partially crosslinked in the thermoplastic composition, and **characterized in that** said modified elastomer is further comprised of a vinyl aromatic monomer selected from the group consisting of styrene and alpha-methylstyrene.

3. A thermoplastic composition as specified in claim 1 or 2 **characterized in that** the thermoplastic polyolefin is present in an amount which is within the range of 20 parts by weight to 80 parts by weight, and wherein the modified elastomer is present in an amount which is within the range of 20 parts by weight to 80 parts by weight, based upon the total weight of the thermoplastic composition.

4. A thermoplastic composition as specified in claim 2 **characterized in that** the modified elastomer is coupled with a member selected from the group consisting of tin and silicon.

5. A thermoplastic composition as specified in claim 1 **characterized in that** the thermoplastic resin used has a melt flow rate of at least greater than 0.5 g/10 minutes as measured by ASTM D 1238 at 230°C/2.16 kg load.

6. A thermoplastic composition as specified in claim 2 **characterized in that** the said blend has a melt flow rate of at least greater than 0.5 g/10 minutes per ASTM D 1238 at 230°C/2.16 kg load.

7. A thermoplastic composition as specified in claim 1 **characterized in that** the modified elastomer has a Mooney ML 1+4 viscosity at 100°C which is within the range of about 10 to about 135.

8. A thermoplastic composition as specified in claim 1 **characterized in that** the modified elastomer used has a Mooney ML 1+4 viscosity at 100°C which is within the range of about 30 to about 80, and **characterized in that** melt point of the thermoplastic polyolefin resin is at least 85°C as measured by differential scanning calorimeter at a heating rate of 10°C/minute.

9. A thermoplastic composition as specified in claim 1 **characterized in that** said thermoplastic composition is further comprised of a reinforcing filler selected from the group consistion of silica, carbon black, kaolin clay, talc, calcium carbonate (CaCO₃), glass fibers, alumina, and expandable 2:1 layered silicates.

## Patentansprüche

1. Thermoplastische Zusammensetzung, **dadurch gekennzeichnet, dass** sie aus einer Mischung eines thermoplastischen Polyolefinharzes und eines modifizierten Elastomers besteht, wobei das thermoplastische Polyolefinharz aus der Gruppe von Polyethylen, isotaktischem Polypropylen, syndiotaktischem Polypropylen, schlagzähen Polypropylen-Copolymeren, die 1-7 Gew.-% Ethylen enthalten, technisch reinem modifiziertem Polypropylen, Metallocen-Polypropylen ausgewählt ist, wobei das modifizierte Elastomer aus einem konjugierten Dien besteht, das aus 1,3-Butadien und Isopren ausgewählt ist, wobei das modifizierte Elastomer hoch verzweigt ist, wobei das modifizierte Elastomer **dadurch gekennzeichnet ist, dass** es einen Frequenz-Kreuzpunkt G' und G" von nicht mehr als 4 rad/s bei 100 °C aufweist, wobei, bezogen auf das Gesamtgewicht der thermoplastischen Zusammensetzung, das thermoplastische Polyolefin in einer Menge im Bereich von 5 bis 95 Gewichtsteilen vorliegt und wobei das modifizierte Elastomer in einer Menge im Bereich von 5 bis 95 Gewichtsteilen vorliegt.

2. Thermoplastische Zusammensetzung nach Anspruch 1, **dadurch gekennzeichnet, dass** das modifizierte Elastomer in der thermoplastischen Zusammensetzung teilweise vernetzt ist und dadurch, dass das modifizierte Elastomer weiterhin aus einem Vinyl-aromatischen Monomer, ausgewählt aus der Gruppe bestehend aus Styrol und α-Methylstyrol besteht.

3. Thermoplastische Zusammensetzung nach Anspruch 1 oder 2, **dadurch gekennzeichnet, dass** das thermoplastische Polyolefin, in einer Menge im Bereich von 20 bis 80 Gewichtsteilen vorhanden ist, und wobei das modifizierte Elastomer, bezogen auf das Gesamtgewicht der thermoplastischen Zusammensetzung, in einer Menge im Bereich von 20 bis 80 Gewichtsteilen vorhanden ist.

4. Thermoplastische Zusammensetzung nach Anspruch 2, **dadurch gekennzeichnet, dass** das modifizierte Elastomer mit einem Glied gekoppelt ist, das aus der Gruppe bestehend aus Zinn und Silicium ausgewählt ist.

5. Thermoplastische Zusammensetzung nach Anspruch 1, **dadurch gekennzeichnet, dass** das verwendete thermoplastische Harz eine Fliessfähigkeit von mindestens größer als 0,5 g/10 min, wie gemessen durch ASTM D 1238 bei 230 °C/2,16 kg Last, aufweist.

6. Thermoplastische Zusammensetzung nach Anspruch 2, **dadurch gekennzeichnet, dass** die Mischung gemäß ASTM D 1238 bei 230 °C/2,16 kg Last eine Fliessfähigkeit von mindestens größer als 0,5 g/10 min aufweist.

7. Thermoplastische Zusammensetzung nach Anspruch 1, **dadurch gekennzeichnet, dass** das modifizierte Elastomer eine Mooney ML 1+4-Viskosität bei 100 °C im Bereich von etwa 10 bis etwa 135 aufweist.

8. Thermoplastische Zusammensetzung nach Anspruch 1, **dadurch gekennzeichnet, dass** das verwendete modifizierte Elastomer eine Mooney ML 1+4-Viskosität bei 100°C im Bereich von etwa 30 bis etwa 80 aufweist und dadurch, dass der Schmelzpunkt des thermoplastischen Polyolefinharzes mindestens 85 °C beträgt, wie gemessen durch Differentialabtastkaloriemetrie mit einer Aufheizgeschwindigkeit von 10 °C /min.

9. Thermoplastische Zusammensetzung nach Anspruch 1, **dadurch gekennzeichnet, dass** die thermoplastische Zusammensetzung außerdem aus einem verstärkenden Füllstoff, ausgewählt aus der Gruppe bestehend aus Siliciumdioxid, Russ, Kaolinton, Talk, Calciumcarbonat (CaCO₃), Glasfasern, Aluminiumoxid und expandierbaren 2:1-Schichtsilicaten, besteht.

## Revendications

1. Composition thermoplastique qui est **caractérisée en ce qu'**elle est composée d'un mélange d'une résine polyoléfine thermoplastique et d'un élastomère modifié, dans laquelle ladite résine polyoléfine thermoplastique est choisie dans le groupe consistant en le polyéthylène, le polypropylène isotactique, le polypropylène syndiotactique, les copolymères de polypropylène choc contenant de 1 à 7 % en poids d'éthylène, du polypropylène modifié de qualité nucléaire, du polypropylène métallocène, dans laquelle ledit élastomère modifié est composé d'un diène conjugué choisi parmi le 1,3-butadiène et l'isoprène, dans laquelle ledit élastomère modifié est fortement ramifié, dans laquelle ledit élastomère modifié est **caractérisé en ce qu'**il présente une fréquence de transfert G' et G" qui n'est pas supérieure à 4 radians/s à 100 °C, dans laquelle la polyoléfine thermoplastique est présente en une quantité qui est comprise dans la fourchette de 5 parties en poids à 95 parties en poids, et dans laquelle l'élastomère modifié est présent en une quantité qui est comprise dans la fourchette de 5 parties en poids à 95 parties en poids, par rapport au poids total de la composition thermoplastique.

2. Composition thermoplastique telle que définie dans la revendication 1, **caractérisée en ce que** l'élastomère modifié est partiellement réticulé dans la composition thermoplastique, et **caractérisée en ce que** ledit élastomère modifié est, en outre, composé d'un monomère vinylique aromatique choisi dans le groupe consistant en le styrène et l'alpha-méthylstyrène.

3. Composition thermoplastique telle que définie dans la revendication 1 ou 2, **caractérisée en ce que** la polyoléfine thermoplastique est présente en une quantité qui est comprise dans la fourchette de 20 parties en poids à 80 parties en poids, et dans laquelle l'élastomère modifié est présent en une quantité qui est comprise dans la fourchette de 20 parties en poids à 80 parties en poids, par rapport au poids total de la composition thermoplastique.

4. Composition thermoplastique telle que définie dans la revendication 2, **caractérisée en ce que** l'élastomère modifié est couplé à un élément choisi dans le groupe consistant en l'étain et le silicium.

5. Composition thermoplastique telle que définie dans la revendication 1, **caractérisée en ce que** la résine thermoplastique utilisée a une vitesse d'écoulement à l'état fondu qui est au moins supérieure à 0,5 g/10 minutes, telle que mesurée suivant l'ASTM D 1238, à 230 °C / une charge de 2,16 kg.

6. Composition thermoplastique telle que définie dans la revendication 2, **caractérisée en ce que** ledit mélange a une vitesse d'écoulement à l'état fondu qui est au moins supérieure à 0,5 g/10 minutes, telle que mesurée suivant l'ASTM D 1238, à 230 °C / une charge de 2,16 kg.

7. Composition thermoplastique telle que définie dans la revendication 1, **caractérisée en ce que** l'élastomère modifié a une viscosité Mooney ML 1 + 4, qui est comprise dans la fourchette d'environ 10 à environ 135.

8. Composition thermoplastique telle que définie dans la revendication 1, **caractérisée en ce que** l'élastomère modifié a une viscosité Mooney ML 1 + 4, à 100 °C, qui est comprise dans la fourchette d'environ 30 à environ 80, et **caractérisée en ce que** le point de fusion de la résine polyoléfine thermoplastique est égal à au moins 85 °C, tel que mesuré grâce à un calorimètre à compensation de puissance, à une cadence de chauffe de 10 °C/minute.

9. Composition thermoplastique telle que définie dans la revendication 1, **caractérisée en ce que** ladite composition thermoplastique est en outre composée d'une charge renforçante choisie dans le groupe consistant en la silice, le noir de carbone, le kaolin, le talc, le carbonate de calcium (CaCO₃), les fibres de verre, l'alumine, et les silicates stratifiés 2:1 expansibles.
